# EUROPÄISCHE PATENTSCHRIFT

(11) **EP 2 808 749 B1**
(45) Veröffentlichungstag und Bekanntmachung des Hinweises auf die Patenterteilung: **08.03.2017**
(21) Anmeldenummer: 13169702.1
(22) Anmeldetag: 29.05.2013
(51) Int. Cl.: G05B 19/418

(54) **Verfahren zum Austausch von Steuerungsinformationen zwischen Bedien- und Beobachtungsgeräten eines industriellen Automatisierungssystems und industrielles Automatisierungssystem**
Method for the exchange of control information between operating and observation devices of an industrial automation system and industrial automation system
Procédé d'échange d'informations de commande entre des appareils de commande et d'observation d'un système d'automatisation industriel et système d'automatisation industriel

(43) Veröffentlichungstag der Anmeldung: 03.12.2014
(73) Patentinhaber: Siemens Aktiengesellschaft, 80333 München (DE)
(72) Erfinder: Gikas, Diamantis, 90473 Nürnberg (DE); Jandl, Klaus, 7000 Eisenstadt (AT); Quendt, Bernhard, 90537 Feucht (DE)

(56) Entgegenhaltungen:
- EP-A1- 2 246 757
- DE-A1- 10 345 886
- US-A1- 2011 252 355

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Derartige Funktionen werden insbesondere an üblicherweise maschinennah bzw. auf Feldebene angeordneten Bedien- und Beobachtungsgeräten mit graphischen Benutzerschnittstellen (HMI - human machine interface) verfügbar gemacht.

Bedien- und Beobachtungsgeräte sind rechnerbasierte Vorrichtungen, auf denen Steuerungsprogramme zur Visualisierung eines Abbilds einer technischen Anlage oder einer komplexen Maschine und deren Steuerung bzw. Regelung installiert sind. Derartige Steuerungsprogramme werden gewöhnlich mittels eines Engineering-Systems projektiert. Dabei wird eine Vielzahl von mehrere Bildobjekte aufweisenden Prozeßbildern erstellt, die einen zu steuernden bzw. regelnden technischen Prozeß oder Teile dieses Prozesses repräsentieren. Zur Laufzeit der Steuerungsprogramme bzw. während eines Runtime-Betriebs wird der technische Prozeß durch Automatisierungsgeräte, wie speicherprogrammierbare Steuerungen, gesteuert bzw. geregelt. Im Rahmen einer Prozeßüberwachung während des Runtime-Betriebs ruft eine Bedienperson typischerweise mehrere Prozeßbilder oder zahlreiche Bildobjekte auf, um einen Überblick über einen aktuellen Anlagenzustand zu erhalten sowie eine Prozeßführung bzw. -bedienung wahrzunehmen.

Ein Verfahren zur webbasierten Darstellung eines dreidimensionalen Abbildes einer Anlage zur Prozeßautomation ist beispielsweise in DE 103 45 886 A1 beschrieben. Dabei wird eine Komponente zur webbasierten Darstellung des dreidimensionalen Abbildes der Anlage über eine konfigurierte Schnittstelle mit zumindest einer Datenquelle der Anlage verbunden. Eine solche Verbindung wird aufgebaut, sobald eine Webseite zur webbasierten Darstellung des dreidimensionalen Abbildes der Anlage auf einem Web-Browser aufgerufen wird. Danach können Prozeßdaten von der Datenquelle zur verbundenen Komponente übertragen werden. Die übertragenen Prozeßdaten werden an projektierten Punkten innerhalb des dreidimensionalen Abbilds der Anlage eingebunden. Damit ist ein aktueller Anlagenzustand während eines Betrieb der Anlage für einen Benutzer an den projektierten Punkten erkennbar.

Aus EP 2124114 A1 ist ein Verfahren zur Auswahl von auf einem Operator-System dargestellten Objekten bekannt, bei dem das Operator-System zum Bedienen und Beobachten eines Prozeßablaufs in einer Anlage vorgesehen ist. Dabei repräsentieren die Objekte Anlagenteile. In Wirkverbindung stehende Objekte werden im Rahmen einer Chargen- oder Wegesteuerung automatisch mit einer Kennung versehen werden. Die Kennung wird einem Operator angezeigt. Falls die Kennung durch den Operator ausgewählt wird, werden nur die mit dieser Kennung versehenen Objekte bzw. diese Objekte markiert auf dem Operator-System angezeigt. Damit können jeweils interessierende Teile einer auf einer Anzeigeeinheit dargestellten Anlage einfach und zuverlässig ausgewählt werden.

In EP 2328048 A1 ist ein Verfahren zum Betreiben eines Bedien- und Beobachtungsgerätes beschrieben, das zur Darstellung eines Prozessbildes vorgesehen ist, welches einen zu steuernden technischen Prozeß repräsentiert. Das Prozeßbild umfaßt mehrere Bildobjekte, welche mittels einer Software aus Instanzen erzeugt werden. Dabei wird jede Instanz aus einem mit basisparametrierbaren Eigenschaften versehenen Typ gebildet, indem dieser Typ dupliziert oder dieser Typ dupliziert und mindestens ein Parameter dieses Typs instanzspezifisch geändert wird. Auf diese Weise können Ladezeiten von Prozeßbildern erheblich reduziert werden.

Eine Zugriffsberechtigung für ein rechnerbasiertes Objekt in einem mehrere Netzknoten umfassenden Automatisierungssystem wird entsprechend EP 2 163 961 B1 anhand einer Steuerungsdatei eingeräumt wird, die entsprechend einem Schema für eine Auszeichnungssprache zur Zugriffsberechtigungseinräumung strukturiert ist und eine hierarchische Baumstruktur abbildet. Dabei sind Zugriffsberechtigungen in einem Objektmodell abgebildet, das eine hierarchische Baumstruktur aufweist. Für einen ausgewählten Netzknoten, an dem Dienste anhand rechnerbasierter Objekte bereitgestellt werden, oder bei einer Anforderung eines Zugriffs auf ein rechnerbasiertes Objekt wird ein relevanter Teilbaum des Objektmodells durch einen Zugriffsrichtliniendienst ermittelt. Die Steuerungsdatei wird aus dem ermittelten relevanten Teilbaum erzeugt. Die erzeugte Steuerungsdatei wird für den ausgewählten Netzknoten oder für einen Zugriff auf das rechnerbasierte Objekt verfügbar gemacht.

Aus US 2011/252355 A1 ist ein Verfahren zum Austausch von Steuerungsinformationen zwischen Bedien- und Beobachtungsgeräten eines industriellen Automatisierungssystems bekannt, bei dem anhand der Steuerungsinformationen ein zumindest ausschnittweises Abbild eines mittels Automatisierungsgeräten geregelten oder gesteuerten technischen Anlage an einer graphischen Benutzerschnittstelle eines jeweiligen Bedien- und Beobachtungsgeräts visualisiert wird. Dem visualisierten Abbild sind Elemente der technischen Anlage repräsentierende computerbasierte Objekte zugeordnet, die durch eine auf einem jeweiligen Bedien- und Beobachtungsgerät eingerichtete Laufzeitumgebung bereitgestellt werden.

In Automatisierungssystemen werden häufig viele mitunter sehr unterschiedliche Bedien- und Beobachtungsgeräte verwendet, die sich insbesondere hinsichtlich Hersteller, Betriebssystem oder unterstützter Sprachversion unterscheiden. Dies erschwert einen transparenten Austausch von Steuerungsinformationen zur Visualisierung eines Abbilds einer gesteuerten bzw. geregelten technischen Anlage beispielsweise unter unterschiedlichen Bedien- und Beobachtungsgeräten innerhalb einer Fertigungszelle erheblich. Dies gilt auch für eine Kommunikation zwischen unterschiedlichen miteinander in Interaktion stehender Bedien- und Beobachtungsgeräte. Ein Austausch von Steuerungsinformationen zur Visualisierung eines Abbilds einer technischen Anlage zwischen unterschiedlichen Bedien- und Beobachtungsgeräten bedeutet entsprechend bisherigen Lösungen einen erheblichen Projektierungs- oder Programmierungsaufwand.

Der vorliegenden Erfindung liegt daher das Problem zugrunde, einen Austausch von Steuerungsinformationen zur Visualisierung eines Abbilds einer technischen Anlage zwischen unterschiedlichen Bedien- und Beobachtungsgeräten ohne Projektierungs- oder Programmierungsaufwand zu ermöglichen.

Diese Aufgabe wird erfindungsgemäß durch ein Verfahren mit den in Anspruch 1 angegebenen Merkmalen und durch ein industrielles Automatisierungssystem mit den in Anspruch 5 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zum Austausch von Steuerungsinformationen zwischen Bedien- und Beobachtungsgeräten eines industriellen Automatisierungssystems wird anhand der Steuerungsinformationen ein zumindest ausschnittweises Abbild eines mittels Automatisierungsgeräten geregelten oder gesteuerten technischen Anlage an einer graphischen Benutzerschnittstelle eines jeweiligen Bedien- und Beobachtungsgeräts visualisiert. Dem visualisierten Abbild sind Elemente der technischen Anlage repräsentierende computerbasierte Objekte zugeordnet, die durch eine auf einem jeweiligen Bedien- und Beobachtungsgerät eingerichtete Laufzeitumgebung bereitgestellt werden. Das Abbild der mittels Automatisierungsgeräten geregelten oder gesteuerten technischen Anlage kann beispielsweise Angaben zu verwendeten Automatisierungsgeräten, Systemzustandsgrößen sowie Verknüpfungen zwischen Automatisierungsgeräten und Systemzustandsgrößen umfassen. Sämtliche an unterschiedlichen Bedien- und Beobachtungsgeräten bereitgestellten Objekttypen werden entsprechend einem einheitlichen Adressierungsschema für einen geräteübergreifenden Zugriff verfügbar gemacht. Damit können sämtliche computerbasierten Objekte geräteübergreifend zur Laufzeit ausgewählt werden, so daß sich für einen derartigen Zugriff keine Notwendigkeit zur Systemanpassung durch Projektierung oder gar Programmierung ergibt.

Computerbasierte Objekte können beispielsweise Betriebssysteme, Steuerungs- oder Anwendungsprogramme, durch Betriebssysteme, Steuerungs- oder Anwendungsprogramme bereitgestellte Dienste, Dienstkomponenten, Leistungsmerkmale, Funktionen oder Prozeduren, Zugriffsrechte auf Systemressourcen oder Peripheriegeräte sowie auf einem Speichermedium befindliche Daten sein. Funktionen oder Prozeduren umfassen dabei insbesondere auch eine Freigabe von Zugriffsberechtigungen in einem Automatisierungssystem. Auf einem Speichermedium befindliche Daten können beispielsweise zur Visualisierung von Prozeßabbildern dienen und folgende Aspekte umfassen:
- Projektierung von Anzeigeelementen, die einerseits auf lokalen Daten und andererseits auf Daten unterlagerter Stationen basieren,
- zentrale Alarmverwaltung, die sämtliche Alarme unterlagerter Stationen in bearbeitbarer bzw. quittierbarer Weise umfaßt,
- zentrale Meßdatenverwaltung, die beispielsweise auch eine Darstellung von Berichten oder sich abzeichnenden Trends aus unterlagerten Stationen umfaßt,
- zentrale Benutzerverwaltung, die eine Zugriffsrechtedefinition für Benutzer unterlagerter Stationen umfaßt, insbesondere eine Zugriffsrechteeinschränkung auf eine ausgewählte unterlagerte Stationen,
- zentrale Rezeptverwaltung, die zentrale Erstellung und Speicherung von Rezepten sowie deren selektive Bereitstellung an ausgewählten unterlagerten Stationen ermöglicht.

Ein computerbasiertes Objekt kann außerdem einem Rechenprozeß zugeordnet sein, der sämtliche Einheiten eines in einen Arbeitsspeicher geladenen ausführbaren Programms umfaßt. Unter einem Rechner sind beispielsweise PCs, Notebooks, Server, PDAs, Mobiltelefone sowie Steuerungs- und Regelungsmodule, Sensoren oder Aktoren in der Automatisierungs-, Fahrzeug-, Kommunikations- oder Medizintechnik zu verstehen - allgemein Einrichtungen, in denen Computerprogramme ablaufen.

Erfindungsgemäß werden den Objekttypen zugeordnete Identifikatoren durch ein Engineering- oder Projektierungssystem festgelegt. Darüber hinaus werden erfindungsgemäß separate Adreßräume für durch die Laufzeitumgebung bereitgestellte computerbasierte Objekte einerseits und für mittels eines Engineering- oder Projektierungssystems erzeugte computerbasierte Objekte andererseits verwendet. Damit sind zur Laufzeit erzeugte Objekte und durch Projektierung erstellte Objekte klar identifizierbar und voneinander zu unterscheiden.

Jedem Bedien- und Beobachtungsgerät ist vorzugsweise innerhalb eines von der Laufzeitumgebung umfaßten Objektmodells ein individuelles Geräteobjekt zugeordnet, wobei jedem Geräteobjekt zumindest ein Benutzerschnittstellenobjekt zugeordnet ist, das zumindest ein Schnittstellenattribut umfaßt. Des weiteren kann entsprechend einer weiteren Ausführungsform der vorliegenden Erfindung bei einem Kommunikationsverbindungsaufbau zwischen zwei Bedien- und Beobachtungsgeräten überprüft werden, ob eine Datenformatanpassung erforderlich ist. Bei einem positiven Überprüfungsergebnis wird automatisch eine Datenformatanpassung durchgeführt. Auf diese Weise können Bedien- und Beobachtungsgeräte miteinander kommunizieren, deren Laufzeitumgebungen sich hinsichtlich ihrer Version unterscheiden.

Das erfindungsgemäße industrielle Automatisierungssystem weist neben mehreren Automatisierungsgeräten zur Regelung oder Steuerung einer technischen Anlage mehrere jeweils eine graphische Benutzerschnittstelle umfassenden Bedien- und Beobachtungsgeräten zur Visualisierung jeweils eines zumindest ausschnittweisen Abbilds der mittels der Automatisierungsgeräte geregelten oder gesteuerten technischen Anlage auf. Dabei sind die Bedien- und Beobachtungsgeräte für eine Visualisierung des jeweiligen Abbilds anhand von Steuerungsinformationen ausgestaltet und eingerichtet. Das Abbild der technischen Anlage kann beispielsweise Angaben zu verwendeten Automatisierungsgeräten, Systemzustandsgrößen sowie Verknüpfungen zwischen Automatisierungsgeräten und Systemzustandsgrößen umfassen.

Darüber hinaus umfaßt das erfindungsgemäße industrielle Automatisierungssystem Mittel zum Austausch der Steuerungsinformationen zwischen den Bedien- und Beobachtungsgeräten sowie jeweils eine auf den Bedien- und Beobachtungsgeräten eingerichtete Laufzeitumgebung, die für eine Bereitstellung von computerbasierten Objekten ausgestaltet und eingerichtet ist, die dem jeweils visualisierten Abbild zugeordnete Elemente der technischen Anlage repräsentieren. Dabei sind sämtliche an unterschiedlichen Bedien- und Beobachtungsgeräten bereitgestellten Objekttypen entsprechend einem einheitlichen Adressierungsschema für einen geräteübergreifenden Zugriff verfügbar gemacht. Damit ist ein geräteübergreifender Zugriff auf die computerbasierten Objekte ohne Anpassungen an Projektierung oder Programmierung möglich.

Beim erfindungsgemäßen Automatisierungssystem sind den Objekttypen zugeordnete Identifikatoren durch ein Engineeringoder Projektierungssystem festgelegt. Außerdem sind zur klaren und zuverlässigen Abgrenzung erfindungsgemäß für durch die Laufzeitumgebung bereitgestellte computerbasierte Objekte und für mittels eines Engineering- oder Projektierungssystems erzeugte computerbasierte Objekte separate Adreßräume vorgesehen.

Darüber hinaus ist entsprechend einer weiteren vorteilhaften Ausgestaltung des erfindungsgemäßen Automatisierungssystems jedem Bedien- und Beobachtungsgerät innerhalb eines von der Laufzeitumgebung umfaßten Objektmodells ein individuelles Geräteobjekt zugeordnet. Dabei ist jedem Geräteobjekt zumindest ein Benutzerschnittstellenobjekt zugeordnet, das zumindest ein Schnittstellenattribut umfaßt. Des weiteren sind die Mittel zum Austausch der Steuerungsinformationen zwischen den Bedien- und Beobachtungsgeräten vorzugsweise derart ausgestaltet und eingerichtet, daß bei einem Kommunikationsverbindungsaufbau zwischen zwei Bedien- und Beobachtungsgeräten überprüft wird, ob eine Datenformatanpassung erforderlich ist, und bei dem eine Datenformatanpassung bei einem positiven Überprüfungsergebnis automatisch durchgeführt wird. Dies unterstützt eine transparente Kommunikation zwischen unterschiedlichen Bedien- und Beobachtungsgeräten, insbesondere bei Verwendung unterschiedlicher Sprachversionen.

Die vorliegende Erfindung wird nachfolgend an einem Ausführungsbeispiel anhand der Zeichnung näher erläutert. Es zeigt
- Figur 1: eine mehrere Bedien- und Beobachtungsgeräte umfassendes industrielles Automatisierungssystem,
- Figur 2: eine schematische Darstellung von durch eine Laufzeitumgebung für Bedien- und Beobachtungsgeräte bereitgestellten computerbasierten Objekten.

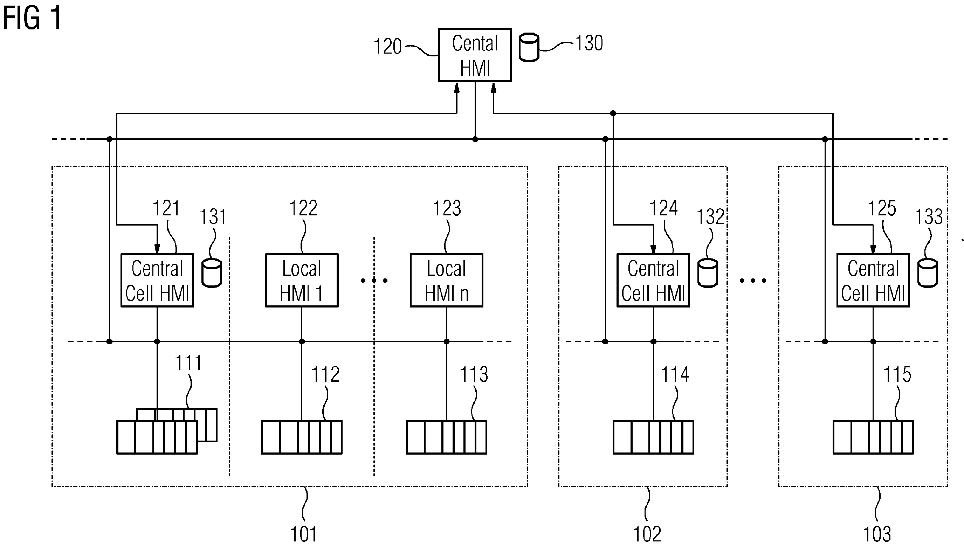

Das in Figur 1 dargestellte industrielle Automatisierungssystem umfaßt mehrere speicherprogrammierbare Steuerungen 111-115 als Automatisierungsgeräte zur Regelung bzw. Steuerung von Komponenten einer technischen Anlage oder einer Maschine sowie mehrere Bedien- und Beobachtungsgeräte 120-125. Die speicherprogrammierbaren Steuerungen 111-115 sowie die Bedien- und Beobachtungsgeräte 120-125 sind über ein vorzugsweise mittels Redundanzverfahren gegen Ausfälle gesichertes industrielles Kommunikationsnetz 104 verbunden und dabei unterschiedlichen Automatisierungszellen 101-103 zugeordnet.

Während die speicherprogrammierbaren Steuerungen 111-113 sowie die Bedien- und Beobachtungsgeräte 121-123 einer ersten Automatisierungszelle 101 zugeordnet sind, gehören die speicherprogrammierbaren Steuerungen 114 bzw. 115 sowie die Bedien- und Beobachtungsgeräte 124 bzw. 125 zu einer zweiten 102 und dritten Automatisierungszelle 103. Innerhalb der ersten Automatisierungszelle 101 ist ein erstes Bedien- und Beobachtungsgerät 121 als Kopfstation ausgestaltet. Darüber hinaus ist das Bedien- und Beobachtungsgerät 120 auf einer den Automatisierungszellen 101-103 überlagerten Ebene angeordnet und kann beispielsweise einer zentralen Leitwarte oder einem Projektierungssystem zugeordnet sein. Pro Automatisierungszelle 101-103 ist im vorliegenden Ausführungsbeispiel einem Bedien- und Beobachtungsgerät 121, 124, 125 jeweils eine lokale Speichereinheit 131-133 zugeordnet, in der zellenweise Datenreihen sowie Benutzer- und Rezeptverwaltungsdaten gespeichert sind. Auch der Bedien- und Beobachtungsstation 120 auf der den Automatisierungszellen 101-103 überlagerten Ebene ist eine Speichereinheit 130 zugeordnet, in der aggregierte Datenreihen sowie Benutzer- und Rezeptverwaltungsdaten gespeichert sind.

Die Bedien- und Beobachtungsgeräte 120-125 weisen jeweils eine graphische Benutzerschnittstelle zur Visualisierung eines Abbilds oder Teilabbilds eines mittels der speicherprogrammierbaren Steuerungen 111-115 automatisierten technischen Prozesses. Das Abbild bzw. Teilabbild umfaßt beispielsweise Angaben zu verwendeten Automatisierungsgeräten, Systemzustandsgrößen sowie Verknüpfungen zwischen Automatisierungsgeräten und Systemzustandsgrößen. Die Visualisierung des Abbilds bzw. Teilabbilds des mittels der speicherprogrammierbaren Steuerungen 111-115 automatisierten technischen Prozesses erfolgt anhand von Steuerungsinformationen, die zwischen den Bedien- und Beobachtungsgeräten 120-125 über das industrielle Kommunikationsnetz 104 austauschbar sind, und zwar ungeachtet unterschiedlicher Gerätetypen, Betriebssystem- oder Sprachversionen.

Auf den Bedien- und Beobachtungsgeräten 120-125 ist jeweils eine Laufzeitumgebung eingerichtet, die für eine Bereitstellung von computerbasierten Objekten vorgesehen ist, die dem jeweils visualisierten Abbild bzw. Teilabbild zugeordnete Elemente der technischen Anlage repräsentieren. Dabei werden sämtliche an mitunter unterschiedlichen Bedien- und Beobachtungsgeräten 120-125 bereitgestellten Objekttypen entsprechend einem einheitlichen Adressierungsschema für einen geräteübergreifenden Zugriff verfügbar gemacht.

Mit dem einheitlichen Adressierungsschema ist ein geräteübergreifender Austausch von Steuerungsinformationen zur Visualisierung eines Abbildes oder Teilabbildes eines technischen Prozesses an einem anderen Bedien- und Beobachtungsgerät auch dann möglich, wenn graphische Benutzerschnittstellen der jeweiligen Bedien- und Beobachtungsgeräte von unterschiedlichen Systemintegratoren stammen, und zwar ohne Zugriff auf die Engineeringdaten. Allein aus vertraglichen Gründen ist ein Zugriff auf Engineeringdaten anderer Systemintegratoren zudem oft äußerst problematisch. Aufgrund des einheitlichen Adressierungsschemas ist ein transparenter laufzeitsystembasierter Zugriff auf Prozeßabbilder anderer Bedien- und Beobachtungsgeräte möglich. Beispielsweise können Prozeßabbilder der den Automatisierungszellen 101-103 zugeordneten Bedien- und Beobachtungsgeräte 121-125 durch das Bedien- und Beobachtungsgerät 120 auf der den Automatisierungszellen 101-103 überlagerten Ebene dargestellt werden. Dabei umfassen die durch die unterlagerten Bedien- und Beobachtungsgeräte 121-125 visualisierten Prozeßabbilder folgende Aspekte:
- Projektierung von Anzeigeelementen, die einerseits auf lokalen Daten und andererseits auf Daten unterlagerter Stationen basieren,
- zentrale Alarmverwaltung, die sämtliche Alarme unterlagerter Stationen in bearbeitbarer bzw. quittierbarer Weise umfaßt,
- zentrale Meßdatenverwaltung, die beispielsweise auch eine Darstellung von Berichten oder sich abzeichnenden Trends aus unterlagerten Stationen umfaßt,
- zentrale Benutzerverwaltung, die eine Zugriffsrechtedefinition für Benutzer unterlagerter Stationen umfaßt, insbesondere eine Zugriffsrechteeinschränkung auf eine ausgewählte unterlagerte Stationen,
- zentrale Rezeptverwaltung, die zentrale Erstellung und Speicherung von Rezepten sowie deren selektive Bereitstellung an ausgewählten unterlagerten Stationen ermöglicht.

Darüber hinaus sind die Bedien- und Beobachtungsgeräte 120-125 derart ausgestaltet und eingerichtet, daß bei einem Kommunikationsverbindungsaufbau zwischen zwei Bedien- und Beobachtungsgeräten 120-125 überprüft wird, ob eine Datenformatanpassung erforderlich ist. Bei einem positiven Überprüfungsergebnis wird eine Datenformatanpassung automatisch durchgeführt.

Den Objekttypen zugeordnete Identifikatoren werden vorzugsweise durch eine zentrale Instanz des industriellen Automatisierungssystems festgelegt, beispielsweise durch ein Engineering- oder Projektierungssystem. Außerdem werden für durch die Laufzeitumgebung bereitgestellte computerbasierte Objekte und für mittels eines Engineering- oder Projektierungssystems erzeugte computerbasierte Objekte separate Adreßräume verwendet.

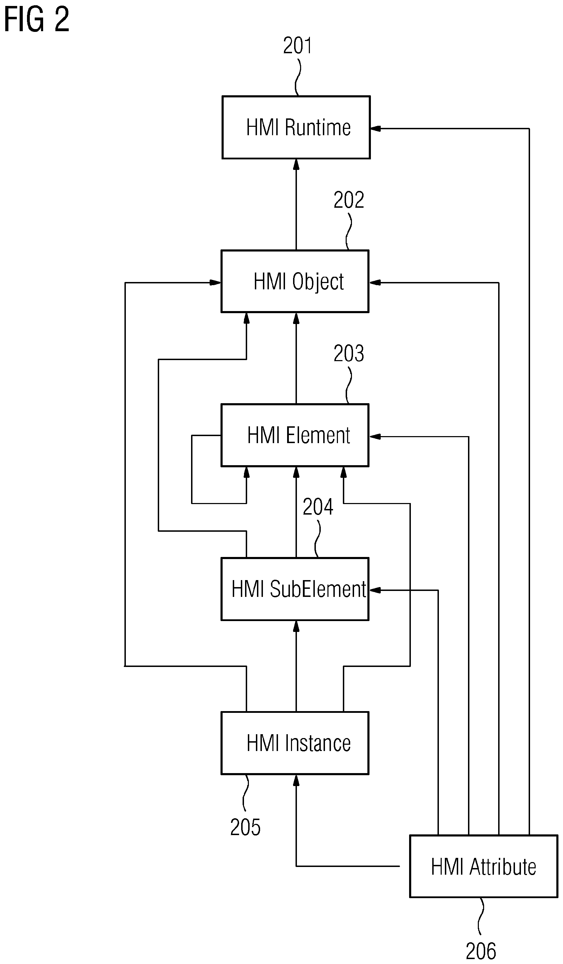

Entsprechend der schematischen Darstellung gemäß Figur 2 ist jedem Bedien- und Beobachtungsgerät 120-125 innerhalb eines von der Laufzeitumgebung umfaßten Objektmodells ein individuelles Geräteobjekt 201 zugeordnet. Jedem Geräteobjekt 201 ist wiederum zumindest ein Benutzerschnittstellenobjekt 202 zugeordnet, das zumindest ein Schnittstellenattribut 206 umfaßt. Das Benutzerschnittstellenobjekt 202 kann außerdem von einer oder mehreren Objektinstanzen 205 referenziert werden. Mittels optionaler Objekte wie Benutzerschnittstellenelement 203 und Benutzerschnittstellenunterelement 204 können innerhalb komplex strukturierter graphischer Benutzeroberflächen weitere Gliederungsmöglichkeiten genutzt werden.

## Patentansprüche

1. Verfahren zum Austausch von Steuerungsinformationen zwischen Bedien- und Beobachtungsgeräten eines industriellen Automatisierungssystems, bei dem
- anhand der Steuerungsinformationen ein zumindest ausschnittweises Abbild einer mittels Automatisierungsgeräten geregelten oder gesteuerten technischen Anlage an einer graphischen Benutzerschnittstelle eines jeweiligen Bedien- und Beobachtungsgeräts visualisiert wird,
- dem visualisierten Abbild Elemente der technischen Anlage repräsentierende computerbasierte Objekte zugeordnet sind, die durch eine auf einem jeweiligen Bedien- und Beobachtungsgerät eingerichtete Laufzeitumgebung bereitgestellt werden,
**dadurch gekennzeichnet, daß**
- sämtliche an unterschiedlichen Bedien- und Beobachtungsgeräten bereitgestellte Objekttypen entsprechend einem einheitlichen Adressierungsschema für einen geräteübergreifenden Zugriff verfügbar gemacht werden,
- den Objekttypen zugeordnete Identifikatoren durch ein Engineering- oder Projektierungssystem festgelegt werden,
- für durch die Laufzeitumgebung bereitgestellte computerbasierte Objekte und für mittels eines Engineering- oder Projektierungssystems erzeugte computerbasierte Objekte separate Adreßräume verwendet werden.

2. Verfahren nach Anspruch 1,
bei dem jedem Bedien- und Beobachtungsgerät innerhalb eines von der Laufzeitumgebung umfaßten Objektmodells ein individuelles Geräteobjekt zugeordnet ist, und bei dem jedem Geräteobjekt zumindest ein Benutzerschnittstellenobjekt zugeordnet ist, das zumindest ein Schnittstellenattribut umfaßt.

3. Verfahren nach einem der Ansprüche 1 oder 2,
bei dem das Abbild der mittels Automatisierungsgeräten geregelten oder gesteuerten technischen Anlage Angaben zu verwendeten Automatisierungsgeräten, Systemzustandsgrößen sowie Verknüpfungen zwischen Automatisierungsgeräten und Systemzustandsgrößen umfaßt.

4. Verfahren nach einem der Ansprüche 1 bis 3,
bei dem bei einem Kommunikationsverbindungsaufbau zwischen zwei Bedien- und Beobachtungsgeräten überprüft wird, ob eine Datenformatanpassung erforderlich ist, und bei dem eine Datenformatanpassung bei einem positiven Überprüfungsergebnis automatisch durchgeführt wird.

5. Industrielles Automatisierungssystem mit
- mehreren Automatisierungsgeräten zur Regelung oder Steuerung einer technischen Anlage,
- mehreren jeweils eine graphische Benutzerschnittstelle umfassenden Bedien- und Beobachtungsgeräten zur Visualisierung jeweils eines zumindest ausschnittweisen Abbilds der mittels der Automatisierungsgeräte geregelten oder gesteuerten technischen Anlage, wobei die Bedien- und Beobachtungsgeräte für eine Visualisierung des jeweiligen Abbilds anhand von Steuerungsinformationen ausgestaltet und eingerichtet sind,
- Mitteln zum Austausch der Steuerungsinformationen zwischen den Bedien- und Beobachtungsgeräten,
**dadurch gekennzeichnet, daß**
- jeweils eine auf den Bedien- und Beobachtungsgeräten eingerichtete Laufzeitumgebung vorgesehen ist, die für eine Bereitstellung von computerbasierten Objekten ausgestaltet und eingerichtet ist, die dem jeweils visualisierten Abbild zugeordnete Elemente der technischen Anlage repräsentieren, wobei sämtliche an unterschiedlichen Bedien- und Beobachtungsgeräten bereitgestellte Objekttypen entsprechend einem einheitlichen Adressierungsschema für einen geräteübergreifenden Zugriff verfügbar gemacht sind,
- den Objekttypen zugeordnete Identifikatoren durch ein Engineering- oder Projektierungssystem festgelegt sind,
- für durch die Laufzeitumgebung bereitgestellte computerbasierte Objekte und für mittels eines Engineering- oder Projektierungssystems erzeugte computerbasierte Objekte separate Adreßräume vorgesehen sind.

6. Automatisierungssystem nach Anspruch 5,
bei dem jedem Bedien- und Beobachtungsgerät innerhalb eines von der Laufzeitumgebung umfaßten Objektmodells ein individuelles Geräteobjekt zugeordnet ist, und bei dem jedem Geräteobjekt zumindest ein Benutzerschnittstellenobjekt zugeordnet ist, das zumindest ein Schnittstellenattribut umfaßt.

7. Automatisierungssystem nach einem der Ansprüche 5 oder 6,
bei dem das Abbild der mittels Automatisierungsgeräten geregelten oder gesteuerten technischen Anlage Angaben zu verwendeten Automatisierungsgeräten, Systemzustandsgrößen sowie Verknüpfungen zwischen Automatisierungsgeräten und Systemzustandsgrößen umfaßt.

8. Automatisierungssystem nach einem der Ansprüche 5 bis 7,
bei dem die Mittel zum Austausch der Steuerungsinformationen zwischen den Bedien- und Beobachtungsgeräten derart ausgestaltet und eingerichtet sind, daß bei einem Kommunikationsverbindungsaufbau zwischen zwei Bedien- und Beobachtungsgeräten überprüft wird, ob eine Datenformatanpassung erforderlich ist, und bei dem eine Datenformatanpassung bei einem positiven Überprüfungsergebnis automatisch durchgeführt wird.

## Claims

1. Method for interchanging control information between operating and observation devices of an industrial automation system, in which
- an at least partial image of a technical installation regulated or controlled by means of automation devices is visualized on a graphical user interface of a respective operating and observation device on the basis of the control information,
- computer-based objects which represent elements of the technical installation and are provided by a runtime environment set up on a respective operating and observation device are assigned to the visualized image,
**characterized in that**
- all object types provided on different operating and observation devices are made available for cross-device access in accordance with a standard addressing scheme,
- identifiers assigned to the object types are stipulated by an engineering or project planning system,
- separate address spaces are used for computer-based objects provided by the runtime environment and for computer-based objects produced by means of an engineering or project planning system.

2. Method according to Claim 1,
in which an individual device object is assigned to each operating and observation device inside an object model included in the runtime environment, and in which at least one user interface object comprising at least one interface attribute is assigned to each device object.

3. Method according to either of Claims 1 and 2,
in which the image of the technical installation regulated or controlled by means of automation devices comprises details of automation devices used, system state variables and links between automation devices and system state variables.

4. Method according to one of Claims 1 to 3,
in which, when setting up a communication connection between two operating and observation devices, a check is carried out in order to determine whether data format adaptation is required, and in which data format adaptation is automatically carried out in the event of a positive check result.

5. Industrial automation system having
- a plurality of automation devices for regulating or controlling a technical installation,
- a plurality of operating and observation devices which each comprise a graphical user interface and are each intended to visualize an at least partial image of the technical installation regulated or controlled by means of the automation devices, the operating and observation devices being configured and set up to visualize the respective image on the basis of control information,
- means for interchanging the control information between the operating and observation devices,
**characterized in that**
- a runtime environment which is set up on the operating and observation devices and is configured and set up to provide computer-based objects representing elements of the technical installation which are assigned to the respectively visualized image is respectively provided, all object types provided on different operating and observation devices being made available for cross-device access in accordance with a standard addressing scheme,
- identifiers assigned to the object types are stipulated by an engineering or project planning system,
- separate address spaces are provided for computer-based objects provided by the runtime environment and for computer-based objects produced by means of an engineering or project planning system.

6. Automation system according to Claim 5,
in which an individual device object is assigned to each operating and observation device inside an object model included in the runtime environment, and in which at least one user interface object comprising at least one interface attribute is assigned to each device object.

7. Automation system according to either of Claims 5 and 6,
in which the image of the technical installation regulated or controlled by means of automation devices comprises details of automation devices used, system state variables and links between automation devices and system state variables.

8. Automation system according to one of Claims 5 to 7,
in which the means for interchanging the control information between the operating and observation devices are configured and set up in such a manner that, when setting up a communication connection between two operating and observation devices, a check is carried out in order to determine whether data format adaptation is required, and in which data format adaptation is automatically carried out in the event of a positive check result.

## Revendications

1. Procédé d'échange d'informations de commande entre des appareils opératoires et des appareils d'observation d'un système d'automatisation industriel, dans lequel
- A l'aide des informations de commande, on visualise une reproduction au moins par section d'une installation technique, régulée ou commandée au moyen d'appareils d'automatisation, sur une interface utilisateur graphique d'un appareil opératoire et d'un appareil d'observation,
- on associe à la reproduction visualisée des objets informatiques, qui représentent des éléments de l'installation technique et qui sont mis à disposition par un environnement de temps d'exploitation agencé sur un appareil opératoire et un appareil d'observation,
**caractérisé en ce que**
- on rend disponible à un accès l'emportant sur l'appareil, conformément à un schéma d'adressage unitaire, l'ensemble des types d'objet mis à disposition des appareils opératoires et d'observation différents,
- on fixe, par un système d'ingénierie ou de planification, des identificateurs affectés aux types d'objet,
- on utilise, pour des objets informatiques mis à disposition par l'environnement de temps d'exploitation et pour des objets informatiques produits au moyen d'un système d'ingénierie ou de planification, des espaces d'adresse différents.

2. Procédé suivant la revendication 1,
dans lequel on affecte un objet d'appareil individuel à chaque appareil opératoire et d'observation au sein d'un modèle d'objet compris par l'environnement de temps d'exploitation et dans lequel on affecte à chaque objet d'appareil au moins un objet d'interface utilisateur, qui comprend au moins un attribut d'interface.

3. Procédé suivant l'une des revendications 1 ou 2,
dans lequel la reproduction de l'installation technique, régulée ou commandée au moyen d'appareils d'automatisation, comprend des indications sur des appareils d'automatisation utilisés, des grandeurs d'état du système, ainsi que des combinaisons entre des appareils d'automatisation et des grandeurs d'état du système.

4. Procédé suivant l'une des revendications 1 à 3,
dans lequel, pour une structure de liaison de communication entre deux appareils opératoires et d'observation, on contrôle si une adaptation de la structure de données est nécessaire et dans lequel on effectue une adaptation de la structure de données automatiquement si le résultat du contrôle est positif.

5. Système d'automatisation industriel comprenant
- plusieurs appareils d'automatisation pour réguler ou commander une installation technique,
- plusieurs appareils opératoires et d'observation comprenant chacun une interface utilisateur graphique et destinés chacun à visualiser une reproduction au moins par section de l'installation technique régulée ou commandée au moyen des appareils d'automatisation, les appareils opératoires et d'observation étant conformés et conçus au moyen d'informations de commande pour une visualisation de la reproduction,
- des moyens d'échange des informations de commande entre les appareils opératoires et d'observation,
**caractérisé en ce que**
- il est prévu respectivement un environnement de temps d'exploitation agencé sur les appareils opératoires et d'observation, qui est conformé et conçu pour une mise à disposition d'objets informatiques, qui représentent des éléments de l'installation technique affectés à la reproduction visualisée, l'ensemble des types d'objet mis à disposition sur des appareils différents opératoires et d'observation étant rendu accessible à un accès l'emportant sur un appareil, conformément à un schéma d'adressage unitaire, sur tous les types d'objet mis à disposition d'appareils différents opératoires et d'observation,
- des identificateurs affectés aux types d'objet sont fixés par un système d'ingénierie ou de planification,
- pour les objets informatiques mis à disposition par l'environnement de temps d'exploitation et pour des objets informatiques produits au moyen d'un système d'ingénierie ou de planification, il est prévu des espaces d'adresse distincts.

6. Système d'automatisation suivant l'une des revendications 5 ou 6,
dans lequel on affecte un objet d'appareil individuel à chaque appareil opératoire et d'observation au sein d'un modèle d'objet compris par l'environnement de temps d'exploitation et dans lequel on affecte à chaque objet d'appareil au moins un objet d'interface utilisateur, qui comprend au moins un attribut d'interface.

7. Système d'automatisation suivant l'une des revendications 5 ou 6,
dans lequel la reproduction de l'installation technique, régulée ou commandée au moyen des appareils d'automatisation, comprend des indications d'appareils d'automatisation utilisés, de grandeurs d'état du système, ainsi que de combinaisons entre des appareils d'automatisation et des grandeurs d'état du système.

8. Système d'automatisation suivant l'une des revendications 5 à 7,
dans lequel les moyens d'échange des informations de commande entre les appareils opératoires et d'observation sont conformés et conçus de manière à contrôler, pour une structure de liaison de communication entre deux appareils opératoires et d'observation, si une adaptation de la structure de données est nécessaire et dans lequel une adaptation de la structure de données est effectuée automatiquement si le résultat du contrôle est positif.
